# EUROPEAN PATENT APPLICATION

(11) **EP 4 841 792 A1**
(43) Date of publication of application: **18.11.2026**
(21) Application number: 26176364.3
(22) Date of filing: 04.05.2026
(51) Int. Cl.: H01M 50/446, H01M 10/052, H01M 50/44, H01M 50/414, H01M 50/431, H01M 50/489

(54) **SEPARATORS FOR RECHARGEABLE LITHIUM BATTERIES AND RECHARGEABLE LITHIUM BATTERIES INCLUDING THE SAME**

(30) Priority: 16.05.2025 KR 20250064158; 23.04.2026 KR 20260074051
(71) Applicant: SAMSUNG SDI CO., LTD., Yongin-si, Gyeonggi-do 17084 (KR)
(72) Inventor: PARK, Eunjin, 17084 Yongin-si (KR); KIM, Gain, 17084 Yongin-si (KR); SEO, Dongwan, 17084 Yongin-si (KR); GU, Jayeon, 17084 Yongin-si (KR); AHN, Hwichan, 17084 Yongin-si (KR); KIM, Hanjun, 17084 Yongin-si (KR)
(74) Representative: Maiwald GmbH

(57) **Abstract**

Disclosed are a separator for a rechargeable lithium battery, and a rechargeable lithium battery including the separator. The separator includes nanofibers. The nanofibers include a polyimide resin and a polyphosphate-based compound, and the polyphosphate-based compound is included in an amount greater than about 20 wt% and less than about 75 wt% based on 100 wt% of the separator.

## Description

### BACKGROUND

### 1. Field

Separators for rechargeable lithium batteries, and rechargeable lithium batteries including the separators are disclosed.

### 2. Description of the Related Art

With increasing presence of electronic devices that use batteries such as, e.g., mobile phones, notebook computers, electric vehicles, and the like, demand for rechargeable batteries having high energy density and high capacity is increasing. Accordingly, improving the performance of rechargeable lithium batteries may be advantageous.

Rechargeable lithium batteries include a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes.

### SUMMARY

Some example embodiments include a separator for a rechargeable lithium battery having desired or improved heat resistance and mechanical strength, and desired or improved flame retardant characteristics and fire extinguishing characteristics.

Some example embodiments include a rechargeable lithium battery having desired or improved thermal stability and charge/discharge characteristics, by including the separator.

Some example embodiments include a separator for a rechargeable lithium battery, the separator including nanofibers, wherein the nanofibers include a polyimide resin; and a polyphosphate-based compound. The polyphosphate-based compound is included in an amount greater than about 20 wt% and less than about 75 wt% based on 100 wt% of the separator.

Another example embodiment includes a separator for a rechargeable lithium battery, comprising a plurality of nanofiber layers including nanofibers. The nanofiber layers include a polyimide resin, and at least one layer of the plurality of nanofiber layers further includes a polyphosphate-based compound.

Some example embodiments include a separator for a rechargeable lithium battery, the separator including nanofibers having a core-shell structure including a core and a shell on the surface of the core, wherein the core and the shell each independently include at least one compound among a polyimide resin, a polyphosphate-based compound, and a mixture of the polyimide resin and the polyphosphate-based compound, and the core and the shell include different compounds.

Some example embodiments include a rechargeable lithium battery including a positive electrode; a negative electrode; and a separator between the positive electrode and the negative electrode.

The separator for a rechargeable lithium battery according to some example embodiments may have desired or improved heat resistance and mechanical strength, and may exhibit desired or improved flame retardant characteristics and fire extinguishing characteristics.

According to some example embodiments, a rechargeable lithium battery includes the separator and has desired or improved thermal stability and charge/discharge characteristics.

### BRIEF DESCRIPTION OF THE DRAWINGS

FIG. 1 to FIG. 6 are schematic views illustrating separators for rechargeable lithium batteries according to some example embodiments.
FIG. 7 is a schematic view illustrating an electrospinning device for manufacturing a multilayered separator for a rechargeable lithium battery.
FIG. 8 to FIG. 11 are schematic views showing rechargeable lithium batteries according to some example embodiments.

### DETAILED DESCRIPTION

Hereinafter, example embodiments are described in detail. However, these embodiments are merely examples, the present disclosure is not limited thereto, and the present disclosure is defined by the scope of claims.

As used herein, when a specific definition is not otherwise provided, is understood that when an element such as a layer, film, region, or substrate is referred to as being "on" another element, the element can be directly on the other element, or intervening elements may also be present therebetween.

As used herein, when a specific definition is not otherwise provided, what is indicated in the singular may also include the plural. In addition, unless otherwise specified, "A or B" may mean "including A, including B, or including A and B."

As used herein, "combination thereof" may refer to a mixture, a laminate, a composite, a copolymer, an alloy, a blend, a reaction product, and the like, of the constituents.

As used herein, "thickness" may be measured, for example, with a micrometer or through a photograph taken with an optical microscope such as, e.g., a scanning electron microscope (SEM).

For example, in the present specification, the thickness of the separator or the nanofiber layer may be measured using a scanning electron microscope (SEM) by observing a cross-section of a lithium secondary battery or the separator. In this case, an SEM image at a magnification of 1,000× to 10,000× may be obtained from a region representative of the overall cross-sectional thickness of the separator or the nanofiber layer. The starting point and the ending point for measuring the thickness may be set based on the outermost boundaries of the separator or the nanofiber layer. As an example, a first virtual tangent line may be drawn passing through the apex of the most protruding nanofiber on one surface of the separator or the nanofiber layer, and a direction perpendicular to the first virtual tangent line may be defined as the thickness measurement direction. The starting point may be defined as the outermost protrusion of the nanofiber located on the first virtual tangent line, and the ending point may be defined as the outermost protrusion on a second virtual tangent line that is parallel to the first virtual tangent line and contacts the other surface opposite to the one surface. The shortest distance between the starting point and the ending point set in this manner may be determined as the thickness of the separator or the nanofiber layer. The measurement may be repeated at 10 or more different points, and the arithmetic mean of the obtained values may be determined as the final thickness.

Alternatively, in the present specification, the thickness of the separator or the nanofiber layer may be measured using a micrometer. In this case, the thickness of the separator or the nanofiber layer itself may be measured using a Digimatic Micrometer (MDH-25MC, Mitutoyo Corp.). The measurement may be repeated at 10 or more different points, and the arithmetic mean of the obtained values may be determined as the final thickness.

As used herein, amounts of components in the separator can be measured using an inductively coupled plasma-optical emission spectroscopy (ICP-OES) or a scanning electron microscopy-energy dispersive spectroscopy (SEM-EDS), or may be predicted from the amount of polymer added to the electrospinning solution.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Separator for Rechargeable Lithium Battery

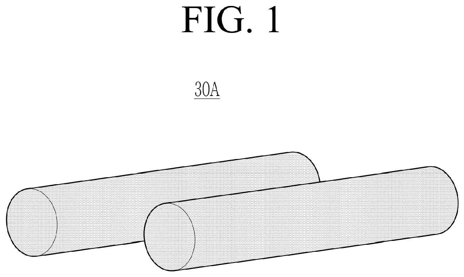

Hereinafter, a separator for a rechargeable lithium battery according to an embodiment is described in detail with reference to FIG. 1 to FIG. 6.

FIG. 1 to FIG. 6 are schematic views illustrating separators for rechargeable lithium batteries according to some example embodiments.

Referring to FIG. 1, a separator 30A for a rechargeable lithium battery according to some example embodiments includes nanofibers, wherein the nanofibers include a polyimide resin (PI) and a polyphosphate-based compound.

The polyimide resin may be or include a heat-resistant polymer and may be prepared by thermal imidization of a precursor, polyamic acid.

Because the polyimide resin has desired or improved heat resistance and high temperature stability, a separator for a rechargeable lithium battery including the polyimide resin may be stable without shrinking at high temperatures compared to a general polyolefin separator. In addition, the polyamic acid is soluble in a solvent and its viscosity may be readily controlled, which may be advantageous for the electrospinning process.

In the polyimide resin, the polyimide may be obtained by imidization of polyamic acid synthesized by a condensation reaction of dianhydride and diamine.

Examples of the dianhydride may include at least one of pyromellitic dianhydride (PMDA), 3,3',4,4'-biphenyltetracarboxylic acid dianhydride (BPDA), 4,4'-(hexafluoroisopropylidene)diphthalic acid dianhydride (6FDA), 3,3',4,4'-benzophenonetetracarboxylic acid dianhydride (BTDA), 1,4,5,8-naphthalenetetracarboxylic acid dianhydride (NTCDA), 1,2,4,5-cyclohexanetetracarboxylic acid dianhydride (HPMDA), oxydiphthalic dianhydride (ODPA), benzophenone tetracarboxylic acid dianhydride, biphenyltetracarboxylic dianhydride, or terphenyltetracarboxylic acid dianhydride (TPDA), but are not limited thereto.

Examples of the diamine may include at least one of aryl amine (wherein aryl may be C6 to C20 aryl) such as oxydianiline (ODA), methylenediphenyldiamine (MDA), meta-phenylenediamine (mPDA), para-phenylenediamine (pPDA), 2,2-bis[4-(4-aminophenoxy)phenyl]propane (BAPP), 1,3-bis(3-aminophenoxy)benzene (APB), 3,3'-diaminobenzidine (DAB), or 4,4'-diaminodiphenylsulfone (DDS), but are not limited thereto.

For example, the polyimide resin may be included in an amount in a range of about 25 wt% to about 80 wt%, for example, about 30 wt% to about 75 wt%, about 40 wt% to about 75 wt%, or about 50 wt% to about 75 wt% based on 100 wt% of the separator. Within the above range, a separator with desired or improved mechanical strength and heat resistance may be implemented.

For example, a weight average molecular weight (M_{w}) of the polyimide resin may be in a range of about 100,000 g/mol to about 300,000 g/mol, for example, about 200,000 g/mol to about 250,000 g/mol. Within the above range, a separator with desired or improved electrospinning properties may be realized.

In the sense of the present application, a polyphosphate-based compound means a compound containing a polyphosphate anion, i.e. an anion obtainable from at least 2PO₄ structural units linked together by sharing oxygen atoms such that a linear or cyclic structure is formed.

The polyphosphate-based compound is a polymer including a phosphate anion, and when included in a separator, the polyphosphate-based compound may impart flame retardant characteristics and fire extinguishing characteristics to the separator.

For example, the polyphosphate-based compound may be produced by condensation polymerization of a phosphate (e.g., ammonium dihydrogen phosphate), and can decompose at high temperatures to produce an inert gas and form a glassy HPO₃ (metaphosphoric acid) film, thereby exhibiting flame retardant characteristics and fire extinguishing characteristics.

**In** addition, the polyphosphate-based compound may be used in combination with the polyimide resin to provide flexibility to the separator, thereby further improving mechanical characteristics.

For example, the polyphosphate-based compound may include a monovalent organic cation, a monovalent metal cation, or a combination thereof.

The monovalent organic cation may include an ammonium cation (N(R¹R²R³R⁴)⁺, where R¹ to R⁴ are each independently at least one of hydrogen, deuterium, or a C1 to C6 alkyl group), a melamine cation (C₃N₆H₇⁺), a guanidinium cation ((C(NH₂)₃⁺), or a combination thereof.

The ammonium cation may be or include, for example, NH₄⁺ or N(CH₃)₄⁺.

The monovalent metal cation may include at least one of Li⁺, Na⁺, K⁺, or a combination thereof.

For example, the polyphosphate-based compound may include at least one of ammonium polyphosphate (APP), melamine polyphosphate (MPP), or a combination thereof.

As an example, the polyphosphate-based compound may include ammonium polyphosphate, and the ammonium polyphosphate decomposes at high temperatures to generate inert gases NH₃ and H₂O and forms a glass-like HPO₃ film, thereby exhibiting desired or improved flame retardant characteristics and fire extinguishing characteristics.

According to some example embodiments, a separator may be implemented with desired or improved flexibility, flame retardant characteristics and fire extinguishing characteristics by including the polyphosphate-based compound in an optimal amount together with the polyimide resin.

For example, a weight average molecular weight (M_{w}) of the polyphosphate-based compound may be in a range of about 50,000 g/mol to about 100,000 g/mol, for example about 60,000 g/mol to about 100,000 g/mol, or about 60,000 g/mol to about 90,000 g/mol. If (when) the above numerical range is satisfied, a separator having desired or improved mechanical strength, flame retardant characteristics, and fire extinguishing characteristics may be realized.

For example, the polyphosphate-based compound may be included in an amount greater than about 20 wt% and less than about 75 wt%, for example, in a range of about 22.5 wt% to about 70 wt%, about 25 wt% to about 65 wt%, about 25 wt% to about 60 wt%, or about 25 wt% to about 50 wt% based on 100 wt% of the separator. If (when) the above range is satisfied, a separator for a rechargeable lithium battery having desired or improved flexibility, desired or improved mechanical strength, flame retardant characteristics, and fire extinguishing characteristics may be realized.

The separator 30A may be or include a single-layer electrospun separator manufactured by electrospinning an electrospinning solution prepared by mixing polyamic acid and a polyphosphate-based compound using one nozzle pack.

The electrospinning process includes spraying a polymer solution into fine nanofibers using a high-voltage electric field. When manufacturing a separator for a rechargeable lithium battery through the electrospinning process, a separator having a uniform nanofiber network may be implemented, thereby securing a high porosity, and accordingly, ionic conductivity and air permeability are improved, and heat resistance and mechanical strength are superior to existing separators.

Accordingly, a separator for a rechargeable lithium battery according to some example embodiments includes nanofibers, and the nanofibers include the polyimide resin and the polyphosphate-based compound.

Within the framework of the present invention, the term "nanofiber" relates to any fiber having an average diameter within the range of 1 nm to 1000 nm.

For example, an average diameter of the nanofibers may be in a range of about 10 nm to about 300 nm, for example, about 50 nm to about 300 nm, about 50 nm to about 150 nm, about 150 nm to about 250 nm, or about 150 nm to about 200 nm. If (when) the above numerical range is satisfied, a separator with desired or improved mechanical strength and porosity may be implemented.

The diameter of the nanofiber may refer to the widest diameter among the diameters of the fiber measured based on the cross-section of the individual nanofiber, and may be measured in a direction perpendicular to the longitudinal direction of the nanofiber.

The average diameter of the nanofibers may be calculated by randomly measuring the cross-sectional diameters of 20 fibers in a scanning electron microscope (SEM) image of the separator surface, and then calculating the arithmetic average of the cross-sectional diameters of the 20 fibers.

For example, a thickness of the separator may be in a range of about 1 µm to about 30 µm, for example, about 5 µm to about 30 µm, about 5 µm to about 25 µm, about 5 µm to about 15 µm, about 8 µm to about 20 µm, or about 8 µm to about 15 µm. If (when) the numerical range is satisfied, an ultra-thin separator may be designed, and a separator having desired or improved durability, porosity, and heat resistance may be realized.

Hereinafter, the separator for a rechargeable lithium battery 30B, 30C, and 30C' according to some example embodiments is described in detail. Because the contents regarding the polyimide resin and the polyphosphate-based compound and the contents regarding the average diameter of nanofibers are the same as the contents described above, their descriptions are omitted, and only the remaining contents are described.

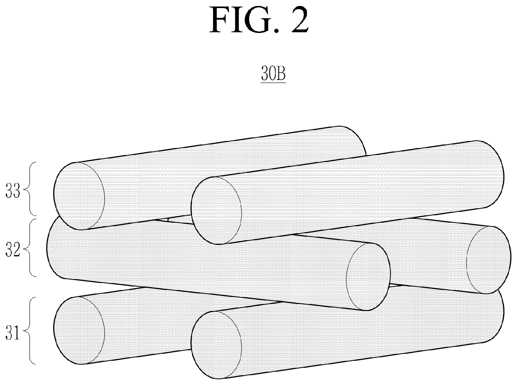

FIG. 2 to FIG. 4 are schematic views illustrating a separator 30B for a rechargeable lithium battery according to some example embodiments.

According to some example embodiments, a separator 30B for a rechargeable lithium battery includes a plurality of nanofiber layers including nanofibers, wherein the nanofiber layers include a polyimide resin and at least one layer of the plurality of nanofiber layers further includes a polyphosphate-based compound.

For example, in the separator, the nanofiber layers may be included in two or more layers, for example, may be included in three or more layers.

Referring to FIG. 2 to FIG. 4, the separator 30B for the rechargeable lithium battery includes a first nanofiber layer 31; a second nanofiber layer 32 on the first nanofiber layer 31; and a third nanofiber layer 33 on the second nanofiber layer 32. The first nanofiber layer 31, the second nanofiber layer 32, and the third nanofiber layer 33 include a polyimide resin, and at least one layer among the first nanofiber layer 31, the second nanofiber layer 32, and the third nanofiber layer 33 may further include a polyphosphate-based compound.

The separator 30B may be or include a multilayer electrospun separator manufactured by electrospinning an electrospinning solution of the same or different composition using a plurality of supply devices (nozzle packs).

Referring to FIG. 2, the first nanofiber layer 31, the second nanofiber layer 32, and the third nanofiber layer 33 may include the polyimide resin and the polyphosphate-based compound. For example, the components of the first nanofiber layer 31, the second nanofiber layer 32, and the third nanofiber layer 33 and the amounts of each component may be the same or different.

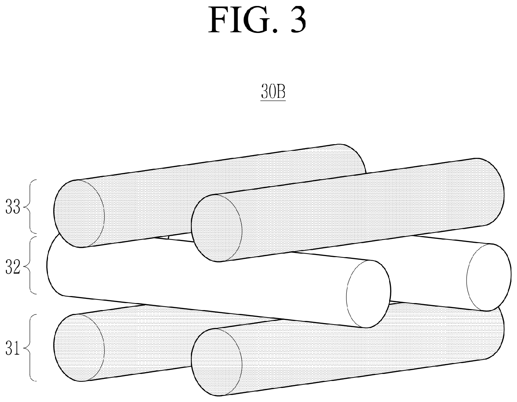

Referring to FIG. 3, the first nanofiber layer 31 and the third nanofiber layer 33 include the polyimide resin and the polyphosphate-based compound, and the second nanofiber layer 32 may include a polyimide resin. For example, the components of the first nanofiber layer 31 and the third nanofiber layer 33 and the amounts of each component may be the same or different.

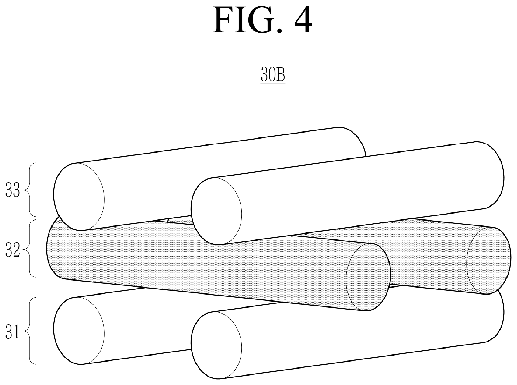

Referring to FIG. 4, the first nanofiber layer 31 and the third nanofiber layer 33 may include the polyimide resin, and the second nanofiber layer 32 may include the polyimide resin and the polyphosphate-based compound.

The separator 30B for a rechargeable lithium battery according to some example embodiments may be composed of or include a multilayer separator, and each layer may be composed of or include the polyimide resin alone, or may be composed of or include the polyimide resin and the polyphosphate-based compound in each optimal amount, so that mechanical strength such as flexibility, flame retardant characteristics, and fire extinguishing characteristics may be better than in the case of a single-layer separator.

For example, based on 100 wt% of the nanofiber layer further including the polyphosphate-based compound, the polyphosphate-based compound may be included in an amount greater than about 20 wt% and less than about 75 wt%, for example, in a range of about 22.5 wt% to about 70 wt%, about 25 wt% to about 65 wt%, about 25 wt% to about 60 wt%, or about 25 wt% to about 50 wt%.

For example, the polyphosphate-based compound may be included in an amount greater than or equal to about 8 wt% and less than about 75 wt%, for example, in a range of about 15 wt% to about 70 wt%, about 20 wt% to about 70 wt%, or about 25 wt% to about 70 wt% based on 100 wt% of the separator 30B.

For example, the polyimide resin may be included in an amount in a range of about 25 wt% to about 95 wt%, for example, about 25 wt% to about 80 wt%, about 30 wt% to about 75 wt%, about 40 wt% to about 75 wt%, or about 50 wt% to about 75 wt% based on 100 wt% of the separator 30B.

If (when) the polyphosphate-based compound is included in the numerical range described above in the multilayer separator 30B, a multilayer separator for a rechargeable lithium battery having desired or improved mechanical strength, flame retardant characteristics, and fire extinguishing characteristics may be realized.

For example, a thickness of the nanofiber layer may be in a range of about 1 µm to about 30 µm, for example about 1 µm to about 20 µm, about 1 µm to about 15 µm, about 1 µm to about 10 µm, about 5 µm to about 15 µm, or about 5 µm to about 10 µm.

For example, a thickness of the separator 30B may be in a range of about 1 µm to about 50 µm, for example, about 5 µm to about 40 µm, about 5 µm to about 30 µm, or about 10 µm to about 30 µm.

If (when) the above numerical range is satisfied, an ultra-thin separator may be designed, and a separator having desired or improved durability, heat resistance, flame retardant characteristics, and fire extinguishing characteristics may be realized.

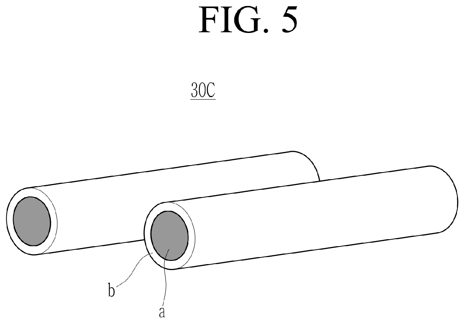

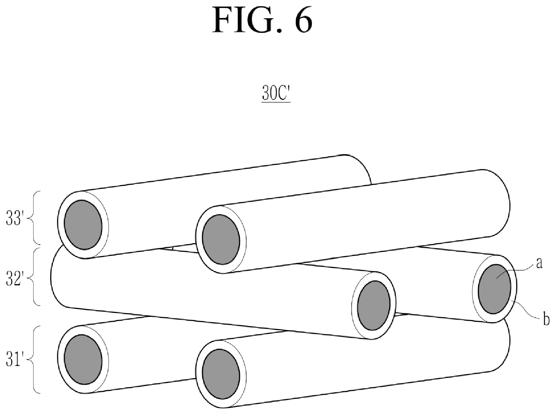

FIG. 5 and FIG. 6 are schematic views illustrating a separators 30C and 30C' for a rechargeable lithium battery according to some example embodiments.

Referring to FIG. 5, the separator 30C for the rechargeable lithium battery includes nanofibers that are core-shell structures including a core "a," and a shell "b" on the surface of the core "a." The core "a" and the shell "b" each independently include any one compound among a polyimide resin, a polyphosphate-based compound, and a mixture of the polyimide resin and the polyphosphate-based compound. For example, the core "a" and the shell "b" may include different compounds.

Referring to FIG. 6, the separator 30C' for the rechargeable lithium battery may include two or more stacked nanofiber layers including nanofibers having the core-shell structure, and may include, for example, three or more layers of nanofiber layers.

Referring to FIG. 6, the separator 30C' may include a first nanofiber layer 31'; a second nanofiber layer 32' on the first nanofiber layer 31'; and a third nanofiber layer 33' on the second nanofiber layer 32'. The first nanofiber layer 31', the second nanofiber layer 32', and the third nanofiber layer 33' may include nanofibers having the core-shell structure described above.

According to some example embodiments, a separator for a rechargeable lithium battery (not shown in the drawing) includes a plurality of nanofiber layers including nanofibers. The nanofiber layer includes a polyimide resin. At least one layer of the plurality of nanofiber layers includes nanofibers having a core-shell structure including a core and a shell on a surface of the core. The core and the shell each independently include any one compound among a polyimide resin, a polyphosphate-based compound, and a mixture of the polyimide resin and the polyphosphate-based compound. The core and the shell may include different compounds.

For example, based on 100 wt% of the separators 30C and 30C', the polyphosphate-based compound may be included in an amount greater than about 20 wt% and less than about 75 wt%, for example, in a range of about 22.5 wt% to about 70 wt%, about 25 wt% to about 65 wt%, about 25 wt% to about 60 wt%, or about 25 wt% to about 50 wt%.

For example, based on 100 wt% of the separators 30C and 30C', the polyimide resin may be included in an amount in a range of about 25 wt% to about 80 wt%, for example, about 30 wt% to about 75 wt%, about 40 wt% to about 75 wt%, or about 50 wt% to about 75 wt%.

When the above amount range is satisfied, a separator for a rechargeable lithium battery having desired or improved mechanical strength, such as flexibility, and desired or improved flame retardant characteristics and fire extinguishing characteristics, may be realized.

For example, an average diameter of the nanofibers, which are the core-shell structure in the separators 30C and 30C', may be in a range of about 10 nm to about 300 nm, for example, about 10 nm to about 200 nm, about 10 nm to about 150 nm, about 50 nm to about 150 nm, or about 50 nm to about 100 nm. If (when) the above numerical range is satisfied, a separator with desired or improved mechanical strength and porosity may be implemented.

For example, a thickness of the single-layer separator 30C may be in a range of about 1 µm to about 30 µm, for example, about 1 µm to about 20 µm, about 1 µm to about 15 µm, about 1 µm to about 10 µm, about 5 µm to about 15 µm, or about 5 µm to about 10 µm.

For example, a thickness of the multilayer separator 30C' may be in a range of about 1 µm to about 50 µm, for example, about 5 µm to about 40 µm, about 5 µm to about 30 µm, or about 10 µm to about 30 µm.

If (when) the above numerical range is satisfied, an ultra-thin separator may be designed, and a separator having desired or improved durability, porosity, and heat resistance may be realized.

For example, the separators 30A, 30B, 30C, and 30C' may further include a heat-resistant polymer, and the heat-resistant polymer may include a polymer of at least one of polypropylene (PP), polyester, polyamide, polyetherimide (PEI), polyetheretherketone (PEEK), polyphenyl terephthalamide (PTA), polysulfone (PSF), polyethersulfone (PES), polyphenylene sulfide (PPS), polyamideimide (PAI), polyetherimide (PEI), polyacrylonitrile (PAN), polyvinylidene fluoride (PVDF), polyvinylidene fluoride-hexafluoropropylene (PVDF-HFP), polycarbonate (PC), polyvinyl chloride (PVC), polyvinylidene chloride, a polyethylene glycol derivative, polyoxide, polyvinylacetate, polystyrene (PS), polyvinylpyrrolidone (PVP), a copolymer thereof, or a combination thereof. The heat-resistant polymer is a non-aqueous polymer, which may be desirable for fiber formation by electrospinning.

For example, the heat-resistant polymer may be included in an amount in a range of about 0 wt% to about 10 wt%, for example, about 0 wt% to about 8 wt%, or about 0 wt% to about 5 wt% based on 100 wt% of the separator 30A, 30B, 30C, and 30C'.

### Method for Manufacturing Separator for Rechargeable Lithium Battery

A method for manufacturing a separator for a rechargeable lithium battery according to some example embodiments includes: (1) mixing polyamic acid, a polyphosphate-based compound, and a solvent to prepare an electrospinning solution; (2) electrospinning the electrospinning solution onto a release film to form a coating layer; (3) performing a heat treatment on the coating layer at a temperature in a range of about 200 °C to about 500 °C; and (4) removing (peeling off) the release film from the separator.

The separator manufactured by the manufacturing method may be or include a separator 30A for a rechargeable lithium battery having the single-layer structure described above.

The electrospinning solution may be prepared by mixing polyamic acid, a polyphosphate-based compound, and a solvent, and optionally may be prepared by further including a heat-resistant polymer as described above.

For example, the solvent may include at least one of dimethyl acetamide, N-methylpyrrolidone, dimethyl formamide, dimethyl sulfoxide, acetone, or a combination thereof.

For example, based on a sum of 100 wt% of the amount of the polyamic acid and the amount of the polyphosphate-based compound, the polyamic acid may be included in an amount in a range of about 25 wt% to about 80 wt%, for example, about 30 wt% to about 75 wt%, about 40 wt% to about 75 wt%, or about 50 wt% to about 75 wt%.

For example, based on a sum of 100 wt% of the amount of the polyamic acid and the amount of the polyphosphate-based compound, the polyphosphate-based compound may be included in an amount greater than about 20 wt% and less than about 75 wt%, for example, in a range of about 22.5 wt% to about 70 wt%, about 25 wt% to about 65 wt%, about 25 wt% to about 60 wt%, or about 25 wt% to about 50 wt%.

If (when) the above numerical range is satisfied, a separator for a rechargeable lithium battery having desired or improved mechanical strength such as flexibility and desired or improved flame retardant characteristics and fire extinguishing characteristics may be manufactured.

Next, the electrospinning of the electrospinning solution prepared above onto a release film to form a coating layer may be performed.

For example, the release film may include at least one of aluminum foil, copper foil, SUS, polyethylene terephthalate (PET), polypropylene (PP), polyethylene (PE), polycarbonate (PC), polyvinyl chloride (PVC), or a combination thereof.

The electrospinning process may be performed by positioning one supply device (nozzle pack) consisting of a tip having a hole size in a range of about 15G (gauge) to about 30G and a collector roller at a predetermined or desired interval, adding the electrospinning solution to the tip, positioning the target substrate on the collector roller, and then applying a voltage in a range of about 35 kV to about 100 kV to the tip.

The number of the tips may be adjusted as desired depending on the types and amounts of the polymers included in the electrospinning solution, and may be, for example, in a range of 1 to 1000.

The predetermined or desired distance between the supply device (nozzle pack) and the target material may be in a range of about 10 cm to about 20 cm.

If (when) the hole size of the tip is in a range of about 25G to about 30G, the hole size of the tip is suitable because a coating layer of a desired shape may be formed.

According to the electrospinning process, a polymer solution is spun and stretched into a fiber shape, and then spun onto a target substrate in the form of nanofibers, thereby forming a coating layer. In more detail, the electrospinning solution is suspended in the form of a droplet due to surface tension at the tip end, and when voltage is applied, charges are accumulated on the surface of the electrospinning solution droplet, and a repulsive force between the charges occurs. Accordingly, the repulsion force between charges is directed in the opposite direction to the surface tension of the solution, and when a critical voltage is reached, a conical Taylor cone is formed, and a polymer jet is emitted from the tip of the Taylor cone, and through multi-axial stretching in the whipping region, nanofibers are collected in the form of a non-woven fabric on a collector roller to form a coating layer.

For example, the electrospinning process may be performed under conditions in a range of about 20 °C to about 30 °C and a relative humidity of about 0% to about 60%. If (when) the electrospinning process is performed under the above temperature and relative humidity conditions, there may be an advantage in spinning while maintaining the thickness of the fiber constant.

Additionally, the roll speed of the collector roller may be adjusted so that the coating layer may be formed to a desired thickness, and may be, for example, a speed in a range of about 50 meters per minute (mpm) to about 300 mpm. In addition, a flow rate of the electrospinning solution discharged from the tip may be adjusted to discharge at a rate in a range of about 150 µl/min to about 100 ml/min, for example, about 1 ml/min to about 100 ml/min.

In addition, the tip air is adjusted as desired to reduce or minimize interference between the tips and to enable uniform electrospinning. The tip air adjustment may be performed by flowing compressed air at a pressure in a range of about 0.01 MPa to about 0.5 MPa.

For example, the electrospinning process may be performed two or more times.

As nanofibers are formed by electrospinning, the formed nanofibers may have a three-dimensional network structure. Because the coating layer is formed by an electrospinning process, the solvent may be readily volatilized, and thus the springback phenomenon that causes damage to the electrode may be better reduced or suppressed, which is suitable.

Next, a heat treatment for the coating layer formed by electrospinning may be performed at a temperature in a range of about 200 °C to about 500 °C to form a separator. Through the heat treatment, the polyamic acid included in the coating layer may be thermally imidized to produce a polyimide nanofiber.

For example, the heat treatment temperature may be in a range of about 200 °C to about 500 °C, for example about 300 °C to about 500 °C, about 200 °C to about 400 °C, or about 300 °C to about 400 °C. When the above numerical range is satisfied, a separator having desired or improved mechanical strength, flame retardant characteristics, and fire extinguishing characteristics may be implemented without deforming the separator.

After forming the separator, further roll pressing may be performed. The roll pressing process may be performed at a temperature in a range of about 25 °C to about 110 °C. If (when) the roll pressing process is further performed, the separator may be compressed to shorten the Li ion movement path, which may be advantageous for lithium ion movement during charging and discharging.

Next, the releasing film may be removed (peeled off) from the manufactured separator to manufacture a separator for a rechargeable lithium battery in the form of a self-standing film.

According to some example embodiments, a method for manufacturing a separator for a rechargeable lithium battery includes: (1) preparing a first electrospinning solution including polyamic acid and a first solvent, and a second electrospinning solution including a polyphosphate-based compound, and a second solvent; (2) alternately electrospinning the first electrospinning solution and the second electrospinning solution onto a release film to form a coating layer; (3) performing a heat treatment on the coating layer at a temperature in a range of about 200 °C to about 500 °C; and (4) removing (peeling off) the release film from the separator.

The separator manufactured by the manufacturing method may be or include a separator 30B for a rechargeable lithium battery having the multilayer structure described above.

The first electrospinning solution may be prepared by mixing the polyamic acid and the first solvent, and the second electrospinning solution may be prepared by mixing the polyamic acid, the polyphosphate-based compound, and the second solvent. Additionally, the first electrospinning solution and the second electrospinning solution may optionally be prepared by further including a heat-resistant polymer as described above.

The first solvent and the second solvent may include at least one of dimethylacetamide, N-methylpyrrolidone, dimethylformamide, dimethyl sulfoxide, acetone, or a combination thereof.

For example, based on the sum of 100 wt% of the amount of the polyamic acid and the amount of the polyphosphate-based compound in the second electrospinning solution, the polyamic acid may be included in an amount in a range of about 25 wt% to about 80 wt%, for example, about 30 wt% to about 75 wt%, about 40 wt% to about 75 wt%, or about 50 wt% to about 75 wt%.

For example, based on the sum of 100 wt% of the amount of the polyamic acid and the amount of the polyphosphate-based compound in the second electrospinning solution, the polyphosphate-based compound may be included in an amount greater than about 20 wt% and less than about 75 wt%, for example, in a range of about 22.5 wt% to about 70 wt%, about 25 wt% to about 65 wt%, about 25 wt% to about 60 wt%, or about 25 wt% to about 50 wt%. When the above numerical range is satisfied, a separator for a rechargeable lithium battery having desired or improved mechanical strength such as flexibility and flame retardant characteristics and fire extinguishing characteristics may be manufactured.

Next, the electrospinning of the first electrospinning solution and the electrospinning of the second electrospinning solution prepared above is alternately performed onto a release film to form a coating layer.

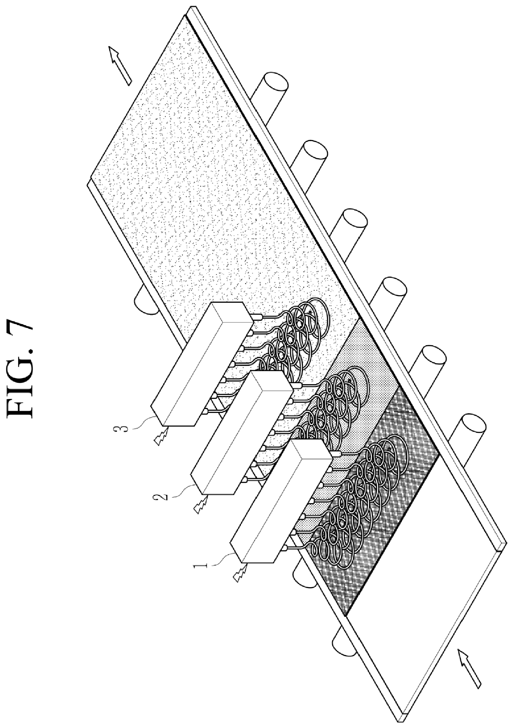

FIG. 7 is a schematic view illustrating an electrospinning device for manufacturing a multilayer separator for a rechargeable lithium battery. In FIG. 7, the electrospinning device is illustrated as including three supply devices as an example, but more than three, or less than three, supply devices may be included depending on the number of layers of the desired separator.

Referring to FIG. 7, the electrospinning device may include a first supply device 1, a second supply device 2, and a third supply device 3 sequentially arranged along the direction of travel, and the first supply device 1, the second supply device 2, and the third supply device 3 may include a range of 1 to 1000 tips having a hole size in a range of about 15G to about 30G.

The lower portion of the supply devices may include a collector roller and a release film placed on the collector roller at a given interval.

The first electrospinning solution or the second electrospinning solution may be filled into the first supply device 1, the second supply device 2, and the third supply device 3.

In addition, a coating layer having a multilayer structure may be manufactured as the first electrospinning solution or the second electrospinning solution filled in the first supply device 1, the second supply device 2, and the third supply device 3 are alternately electrospun on a release film in the direction of travel of the electrospinning device.

Because the conditions of the other electrospinning processes are the same as those described above, detailed descriptions therefor are omitted here.

Next, the method for manufacturing the separator may include performing a heat treatment on the coating layer at a temperature in a range of about 200 °C to about 500 °C to form a separator; and removing the release film from the separator. Because the descriptions of these processes are the same as described above, detailed descriptions therefor are omitted here.

According to some example embodiments, a method for manufacturing a separator for a rechargeable lithium battery includes: (1) preparing a first electrospinning solution including polyamic acid and a first solvent, a second electrospinning solution including polyamic acid, a polyphosphate-based compound, and a second solvent, and a third electrospinning solution including a polyphosphate-based compound and a third solvent; (2) electrospinning two of the first electrospinning solution, the second electrospinning solution, and the third electrospinning solution onto a release film using a co-axial double tip to form a coating layer; (3) performing a heat treatment on the coating layer at a temperature in a range of about 200 °C to about 500 °C; and (4) removing (peeling off) the release film from the separator.

The separator manufactured by the manufacturing method may be or include a separator 30C and/or 30C' for a rechargeable lithium battery having a single-layer or multilayer structure including the core-shell structure described above.

The first electrospinning solution may be prepared by the mixing polyamic acid and the first solvent, the second electrospinning solution may be prepared by mixing the polyamic acid, the polyphosphate-based compound, and the second solvent, and the third electrospinning solution may be prepared by mixing the polyphosphate-based compound and the third solvent.

Additionally, the first electrospinning solution, the second electrospinning solution, and the third electrospinning solution may optionally be prepared by further including a heat-resistant polymer as described above.

The first solvent, the second solvent, and the third solvent may include at least one of dimethylacetamide, N-methylpyrrolidone, dimethylformamide, dimethyl sulfoxide, acetone, or a combination thereof.

For example, based on a sum of 100 wt% of the amount of polyamic acid and the amount of the polyphosphate-based compound included in two electrospinning solutions among the first electrospinning solution, the second electrospinning solution, and the third electrospinning solution, the polyphosphate-based compound may be included in an amount greater than about 20 wt% and less than about 75 wt%, and may be included in an amount of, for example, in a range of about 22.5 wt% to about 70 wt%, about 25 wt% to about 65 wt%, about 25 wt% to about 60 wt%, or about 25 wt% to about 50 wt%.

For example, based on the sum of 100 wt% of the amount of polyamic acid and the amount of the polyphosphate-based compound included in two electrospinning solutions among the first electrospinning solution, the second electrospinning solution, and the third electrospinning solution, the polyamic acid may be included in an amount in a range of about 25 wt% to about 80 wt%, for example, about 30 wt% to about 75 wt%, about 40 wt% to about 75 wt%, or about 50 wt% to about 75 wt%.

If (when) the above range is satisfied, a separator for a rechargeable lithium battery having desired or improved mechanical strength such as flexibility and desired or improved flame retardant characteristics and fire extinguishing characteristics may be implemented.

Next, the forming of the coating layer by electrospinning two of the first electrospinning solution, the second electrospinning solution, and the third electrospinning solution onto a release film using a co-axial double tip may be performed.

For example, the process may be performed through a co-axial double tip, and the co-axial double tip may be composed of or include an inner tip and an outer tip arranged to surround the inner needle based on the same central axis. The electrospinning solution injected into the inner tip may form a core of a core-shell structure after electrospinning, and the electrospinning solution injected into the outer tip may form a shell of a core-shell structure after electrospinning.

For example, one of the first electrospinning solution, the second electrospinning solution, and the third electrospinning solution may be injected into the outer tip, and another of the remaining electrospinning solutions may be injected into the inner tip. For example, the electrospinning solution injected into the outer tip and the electrospinning solution injected into the inner tip may be different from each other.

As an example, the first electrospinning solution may be injected into the inner tip, and the third electrospinning solution may be injected into the outer tip.

If (when) electrospinning is performed using a co-axial double tip including an inner tip filled with a first electrospinning solution and an outer tip filled with a third electrospinning solution, a separator including a core-shell structure including a core including a polyimide resin and a shell disposed on the surface of the core and including a polyphosphate-based compound may be manufactured.

As another example, a separator 30C' including two or more stacked nanofiber layers including nanofibers having the core-shell structure may be manufactured using an electrospinning device according to FIG. 7 as described above.

For example, the tips included in the first supply device 1, the second supply device 2, and the third supply device 3 may be or include the aforementioned co-axial double tip.

When using the electrospinning device, a separator 30C' for a rechargeable lithium battery may be manufactured in which the core-shell structure is stacked in a plurality of layers as shown in FIG. 6.

Because the conditions of the other electrospinning processes are the same as the conditions described above, detailed descriptions therefor are omitted below.

Next, the method for manufacturing the separator may include performing a heat treatment on the coating layer at a temperature in a range of about 200 °C to about 500 °C to form a separator; and removing the release film from the separator. Because the descriptions of these processes are the same as described above, detailed descriptions therefor are omitted here.

### Rechargeable Lithium Battery

Some example embodiments include a rechargeable lithium battery including a positive electrode, a negative electrode, and the separator between the positive electrode and the negative electrode.

Because the rechargeable lithium battery includes an electrode including the aforementioned separator, the separator has desired or improved thermal stability and desired or improved charge/discharge characteristics.

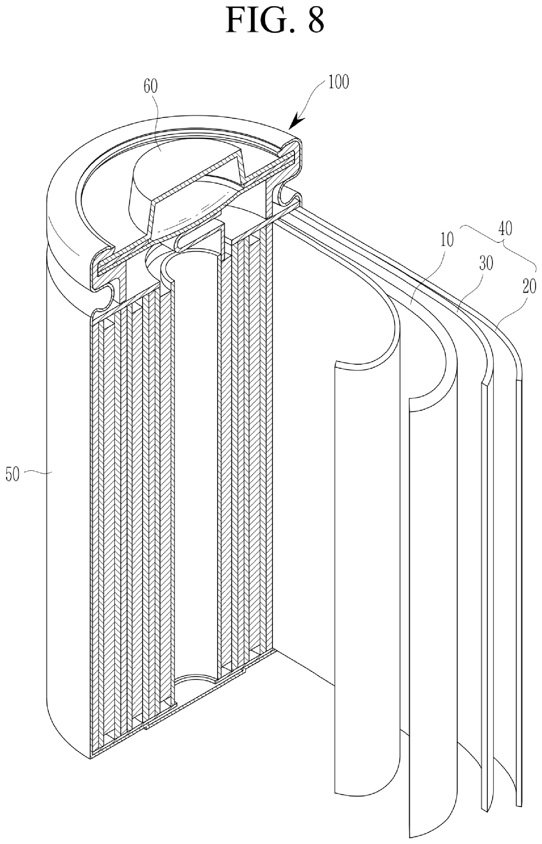

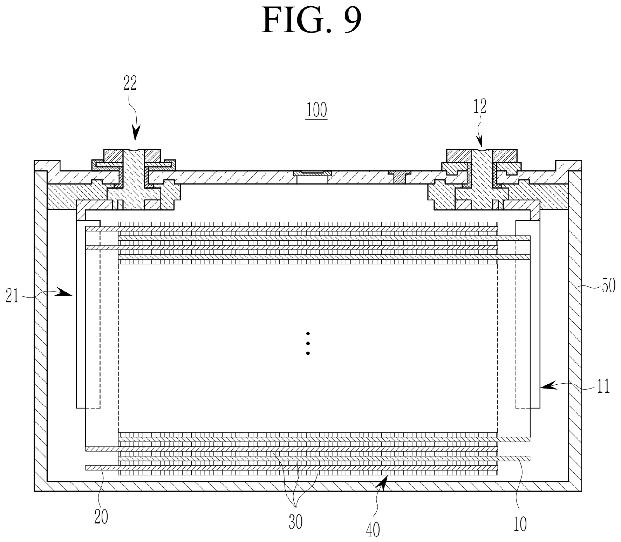

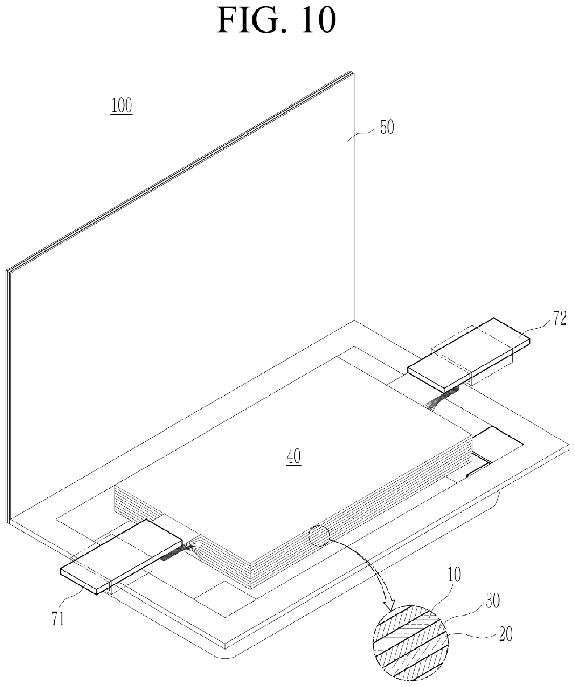

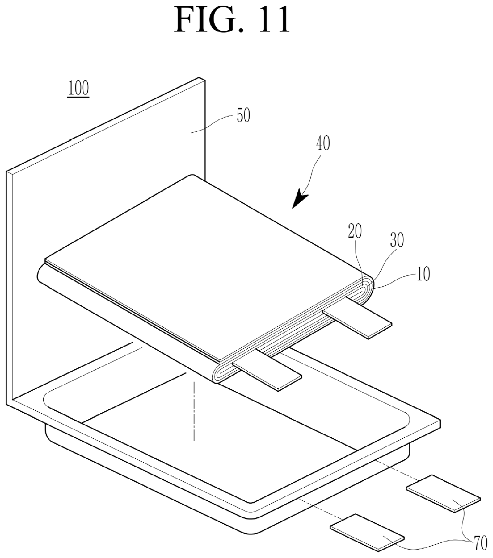

The rechargeable lithium battery may be classified into cylindrical, prismatic, pouch, coin, and the like depending on their shape. FIG. 8 to FIG. 11 are schematic view illustrating a rechargeable lithium battery according to some example embodiments. FIG. 8 shows a cylindrical battery, FIG. 9 shows a square battery, and FIG. 10 and FIG. 11 show pouch-type batteries. Referring to FIG. 8 to FIG. 11, a rechargeable lithium battery 100 includes an electrode assembly 40 with a separator 30 between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals a case 50 as shown in FIG. 8.

In FIG. 9, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 10 and FIG. 11, a rechargeable lithium battery 100 may include electrode tabs 70 illustrated in FIG. 11, or a positive electrode tab 71 and a negative electrode tab 72 illustrated in FIG. 10, the electrode tabs 70/71/72 forming electric paths for inducing a current formed in an electrode assembly 40 to the outside of the battery 100.

A rechargeable lithium battery according to some example embodiments may be applicable to, e.g., automobiles, mobile phones, and/or various types of electrical devices, but the present disclosure is not limited thereto.

Hereinafter, the remaining components of a rechargeable lithium battery, excluding the separator, are described in detail.

### Positive Electrode

The positive electrode for a rechargeable lithium battery may include a current collector, and a positive electrode active material layer formed on the current collector. The positive electrode active material layer includes a positive electrode active material, and may further include a binder and/or a conductive material.

For example, the positive electrode may further include an additive that can constitute a sacrificial the positive electrode.

As the positive electrode active material, a compound (lithiated intercalation compound) capable of intercalating and deintercalating lithium may be used. For example, one or more of a composite oxide of lithium and a metal such as or including at least one of cobalt, manganese, nickel, and a combination thereof may be used.

The composite oxide may be or include a lithium transition metal composite oxide, and examples thereof may include at least one of lithium nickel-based oxide, lithium cobalt-based oxide, lithium manganese-based oxide, lithium iron phosphate-based compound, cobalt-free lithium nickel-manganese-based oxide, or a combination thereof.

As an example, a compound represented by any one of the following chemical formulas may be used. LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); LiₐFePO₄ (0.90≤a≤1.8).

In the above chemical formulas, A is or includes at least one of Ni, Co, Mn, or a combination thereof; X is or includes at least one of Al, Ni, Co, Mn, Cr, Fe, Mg, Sr, V, a rare-earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al or a combination thereof.

For example, the positive electrode active material may be or include a high-nickel positive electrode active material in which the nickel content is greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in a lithium transition metal composite oxide. The high-nickel positive electrode active materials may achieve high capacity, and may be applicable to high-capacity, high-density rechargeable lithium batteries.

An amount of the positive electrode active material may be in a range of about 90 wt% to about 99.5 wt% based on 100 wt% of the positive electrode active material layer, and amounts of each of the binder and the conductive material may independently be in a range of about 0.5 wt% to about 5 wt%, respectively, based on 100 wt% of the positive electrode active material layer.

The binder attaches the positive electrode active material particles to each other, and attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may impart conductivity to the electrode, and any material that does not cause an adverse chemical change and that conducts electrons can be used in the battery. Examples of the conductive material may include a carbon-based material such as at least one of natural graphite, artificial graphite, carbon black, acetylene black, Ketjen black, a carbon fiber, a carbon nanofiber, and carbon nanotube; a metal-based material containing at least one of copper, nickel, aluminum, silver, etc., in a form of a metal powder or a metal fiber; a conductive polymer such as a polyphenylene derivative; or a mixture thereof.

The current collector may use an Al, but the current collector is not limited thereto.

### Negative Electrode

The negative electrode for a rechargeable lithium battery includes a current collector, and a negative electrode active material layer on the current collector. The negative electrode active material layer may include a negative electrode active material, and may further include a binder and/or a conductive material.

The negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, for example crystalline carbon, amorphous carbon or a combination thereof. The crystalline carbon may be graphite such as non-shaped, sheet-shaped, flake-shaped, sphere-shaped, or fiber-shaped natural graphite or artificial graphite, and the amorphous carbon may be or include at least one of a soft carbon, a hard carbon, a mesophase pitch carbonization product, calcined coke, and the like.

The lithium metal alloy includes an alloy of lithium and a metal including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may be or include at least one of Sn, SnO₂, a Sn-based alloy, or a combination thereof.

The silicon-carbon composite may be or include a composite of silicon and amorphous carbon. According to some example embodiments, the silicon-carbon composite may be in the form of silicon particles, and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core.

The Si-based negative electrode active material or Sn-based negative electrode active material may be mixed with the carbon-based negative electrode active material.

For example, the negative electrode active material layer may include a range of about 90 wt% to about 99 wt% of the negative electrode active material, a range of about 0.5 wt% to about 5 wt% of the binder, and a range of about 0 wt% to about 5 wt% of the conductive material.

The binder attaches the negative electrode active material particles to each other, and attaches the negative electrode active material to the current collector. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be or include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or include a polymer material capable of being fibrous, and may be or include, for example, at least one of polytetrafluoroethylene, polyvinylidene fluoride, a polyvinylidene fluoride-hexafluoropropylene copolymer, polyethylene oxide, or a combination thereof.

The conductive material is included to provide electrode conductivity, and any electrically conductive material may be used as a conductive material unless the electrically conductive material causes an adverse chemical change in the battery. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum silver, and the like; a conductive polymer such as a polyphenylene derivative; or a mixture thereof.

The negative electrode current collector may include at least one of a copper foil, a nickel foil, a stainless steel foil, a titanium foil, a nickel foam, a copper foam, a polymer substrate coated with a conductive metal, and a combination thereof.

### Electrolyte Solution

An electrolyte solution for a rechargeable lithium battery includes a non-aqueous organic solvent and a lithium salt.

The non-aqueous organic solvent constitutes a medium for transmitting ions taking part in the electrochemical reaction of a battery.

The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol and isopropyl alcohol. The aprotic solvent may include at least one of nitriles such as R-CN (wherein R is a C2 to C20 linear, branched, or cyclic hydrocarbon group, a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent may be used alone or in a mixture of two or more types of solvents.

If (when) using a carbonate-based solvent, a cyclic carbonate and a chain carbonate may be mixed together, and the cyclic carbonate and the chain carbonate may be mixed in a volume ratio in a range of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

Hereinafter, examples of the present disclosure and comparative examples are described. These examples, however, are not in any sense to be interpreted as limiting the scope of the disclosure.

### Examples:

### (1) Single-layer Separator

### Example 1-1

An electrospinning solution was prepared by mixing polyamic acid, ammonium polyphosphate (APP, M_{w}= 90,000 g/mol), and dimethyl acetamide solvent. Based on a sum of 100 wt% of the amount of the polyamic acid and the amount of the ammonium polyphosphate, the polyamic acid was included at 75 wt% and the ammonium polyphosphate was included at 25 wt%.

Subsequently, the electrospinning solution was electrospun on a releasing film to form a coating layer. The electrospinning was performed under the following conditions.

The electrospinning was performed at 26 °C under relative humidity of 50% by positioning one nozzle pack consisting of 52 tips with a hole size of 25G and a collector roller at an interval of 15 cm, and adding the electrospinning solution to the tips, and applying a voltage of 40 kV to 50 kV thereto. Herein, the collector roller was set at a rolling speed of 50 mpm to 300 mpm, and the electrospinning solution was adjusted to discharge a solid content of 150 µl/min from the tips. In addition, the electrospinning was performed by inflowing compressed air at a pressure of 0.1 MPa.

Subsequently, the coating layer was heat-treated at 400 °C to form a separator, from which the releasing film was removed, obtaining the separator (thickness = 10 µm) according to Example 1-1.

The final separator included nanofibers (average diameter = 200 nm) and included 75 wt% of polyimide resin (PI) and 25 wt% of ammonium polyphosphate (APP) based on 100 wt% of the separator.

### Example 1-2 and Comparative Examples 1-1 to 1-5

Separators were manufactured substantially in the same manner as in Example 1-1 except that the mixing amounts of the polyamic acid and the ammonium polyphosphate were adjusted to prepare an electrospinning solution having a composition shown in Table 1 below.

### (2) 3-layer Separator

### Example 2-1

A separator was manufactured to have a 3-layer structure substantially in the same manner as in Example 1-1 except that the electrospinning solution of Example 1-1 was filled in each first, second, and third supply devices of the electrospinning device according to FIG. 7, and then electrospun on a releasing film under the same electrospinning conditions as in Example 1-1.

### Example 2-2

A separator was manufactured to have a 3-layer structure substantially in the same manner as in Example 2-1 except that the electrospinning solution of Example 1-2 was used.

### Example 2-6

A first electrospinning solution was prepared by mixing polyamic acid and dimethyl acetamide solvent, and a second electrospinning solution was prepared by mixing polyamic acid, ammonium polyphosphate (M_{w}=60,000 g/mol), and a dimethyl acetamide solvent. At this time, based on the sum of 100 wt% of the amount of the polyamic acid and the amount of the ammonium polyphosphate in the second electrospinning solution, the polyamic acid was included at 75 wt% and the ammonium polyphosphate was included at 25 wt%.

Subsequently, the second electrospinning solution was filled in first and third supply devices of an electrospinning device shown in FIG. 7, and the first electrospinning solution was filled in a second supply device thereof.

Next, a separator was manufactured to have a 3-layer structure substantially in the same manner as in Example 1-1 except that same electrospinning condition as in Example 1-1 was electrospun on a releasing film.

In the 3-layer separator of Example 2-6, each layer had a composition shown in Table 3.

### Examples 2-7 and 2-8

Separators were manufactured substantially in the same manner as in Example 2-6 except that the mixing amounts of the polyamic acid and the ammonium polyphosphate were adjusted to prepare a second electrospinning solution having a composition shown in Table 3.

### Example 2-9

A separator was manufactured substantially in the same manner as in Example 2-6 except that the first electrospinning solution was filled in first and third supply devices of an electrospinning device, and the second electrospinning solution was filled in a second supply device thereof.

### Examples 2-10 and 2-11

Separator were manufactured substantially in the same manner as in Example 2-9 except that the mixing amounts of the polyamic acid and the ammonium polyphosphate was adjusted to prepare a second electrospinning solution having a composition shown in Table 3 below.

### (3) Core-shell Separator

### Example 3-1

A first electrospinning solution was prepared by mixing polyamic acid and a dimethyl acetamide solvent, and a third electrospinning solution was prepared by mixing ammonium polyphosphate (M_{w}=90,000 g/mol) and a dimethyl acetamide solvent.

Based on a sum of 100 wt% of the amount of polyamic acid and the amount of the ammonium polyphosphate included in the first electrospinning solution and the third electrospinning solution, the polyamic acid was included at 75 wt% and the ammonium polyphosphate was included at 25 wt%.

Next, a separator was manufactured in substantially the same manner as in Example 1-1, except that electrospinning was performed using a co-axial dual tip composed of an inner tip and an outer tip arranged to surround the inner needle based on the same central axis, instead of the tip used in the electrospinning of Example 1-1.

Specifically, the inner tip was filled with a first electrospinning solution, and the outer tip was filled with a third electrospinning solution.

The final separator manufactured included nanofibers (average diameter = 150 nm), and the nanofibers were manufactured in the form of a core-shell structure in which a core included the polyimide resin (PI); and a shell was disposed on the surface of the core and included the ammonium polyphosphate (APP).

Based on 100 wt% of the separator, the polyimide resin (PI) was included at 75 wt%, and the ammonium polyphosphate (APP) was included at 25 wt%.

### Example 3-2

A separator having a three-layer structure was manufactured in substantially the same manner as in Example 3-1 by electrospinning using the first supply device, the second supply device, and the third supply device of the electrospinning device according to FIG. 7, except that a supply device including a co-axial double tip was used as in Example 3-1.

### Example 3-3

A separator was manufactured in substantially the same manner as in Example 3-1, except that the amounts of polyamic acid and ammonium polyphosphate were adjusted during the preparation of the electrospinning solution to manufacture a separator having a composition as shown in Table 4 below.

### Example 3-4

A separator was manufactured in substantially the same manner as in Example 3-2, except that the amounts of polyamic acid and ammonium polyphosphate were adjusted during the preparation of the electrospinning solution to manufacture a separator having a composition as shown in Table 4 below.

### Evaluation Examples:

### Evaluation Example 1: Evaluation for Tensile Strength and Elongation

Tensile strength and elongation of the separators according to Examples and Comparative Examples were measured according to ASTM D882 by using a universal testing machine (UTM), and the results are shown in Tables 1 to 4 below.

### Evaluation Example 2: Evaluation of Cell Thermal Exposure Characteristics

The separators according to Examples and Comparative Examples were respectively used to manufacture rechargeable lithium battery cells.

A positive electrode active material slurry was prepared by mixing 96 wt% of LiCoO₂, 2 wt% of Ketjen black, and 2 wt% of polyvinylidene fluoride in an N-methyl pyrrolidone solvent. The positive electrode active material slurry was coated on an Al current collector, and then dried and compressed to manufacture a positive electrode.

A negative electrode active material slurry was prepared by mixing 97.5 wt% of artificial graphite, 1.0 wt% of carboxylmethyl cellulose, and 1.5 wt% of styrene butadiene rubber (SBR) in a water solvent. The negative electrode active material slurry was coated on a copper current collector and then, dried and compressed to manufacture a negative electrode.

Between the manufactured positive and negative electrodes, each of the separators according to Examples and Comparative Examples was disposed, and then an electrolyte solution prepared by dissolving LiPF₆ in a mixed solvent of ethylene carbonate and ethylmethyl carbonate (in a volume ratio of 50:50) was injected thereinto, manufacturing rechargeable lithium battery cells.

The rechargeable lithium battery cells were respectively fully charged to SOC 100, and then evaluated with respect to thermal exposure.

Each of the rechargeable lithium battery cells was respectively placed in a chamber, and then examined with respect to battery changes after increasing its temperature to 137 °C, 140 °C, and 143 °C from room temperature (25 °C) at 7 °C/min, while maintaining the temperatures for 1 hour.

While maintaining the temperatures, if (when) no thermal runaway occurred, 'OK' was given, but if (when) the thermal runaway sharply occurred, when exposed to the high temperatures, 'NG' was given, and the results are shown in Tables 1 to 4 below.

**Table 1:**

| | Configuration of single-layer separator | Thickness (µm) | Thermal exposure evaluation | | | Tensile strength | Elongation |
|---|---|---|---|---|---|---|---|
| | | | 137 °C | 140 °C | 143 °C | kgf/cm² | % |
| Example 1-1 | PI 75 wt% + APP 25 weight | 10 | OK | OK | OK | 1,101 | 12 |
| Example 1-2 | PI 50 wt% + APP 50 wt% | 10 | OK | OK | OK | 998 | 11 |
| Comparative Example 1-1 | PI 100 wt% | 10 | OK | NG | NG | 1,882 | 23 |
| Comparative Example 1-2 | APP 100 wt% | 10 | NG | NG | NG | 83 | 1 |
| Comparative Example 1-3 | PI 80 wt% + APP 20 wt% | 10 | OK | OK | NG | 1,342 | 16 |
| Comparative Example 1-4 | PI 25 wt% + APP 75 wt% | 10 | OK | NG | NG | 642 | 5 |
| Comparative Example 1-5 | PI 20 wt% + APP 80 wt% | 10 | OK | NG | NG | 432 | 5 |

**Table 2:**

| | Configuration of each layer of 3-layer separator | Total thickness of separator (µm) | Thermal exposure evaluation | | | Tensile strength | Elongation |
|---|---|---|---|---|---|---|---|
| | | | 137 °C | 140 °C | 143 °C | kgf/cm² | % |
| Example 2-1 | PI 75 wt% + APP 25 wt% | 10 | OK | OK | OK | 1,917 | 15 |
| Example 2-2 | PI 50 wt% + APP 50 wt% | 10 | OK | OK | OK | 1,411 | 15 |

**(Table 3)**

| | Configuration of each layer of multilayer separator | Thickness of each layer (µm) | Thermal exposure evaluation | | | Tensile strength | Elongation |
|---|---|---|---|---|---|---|---|
| | | | 137 °C | 140 °C | 143 °C | kgf/cm² | % |
| Example 2-6 | (First layer) PI 75 wt% + APP 25 wt% | 10 | OK | OK | OK | 2,101 | 17 |
| | (Second layer) PI 100 wt% | 10 | | | | | |
| | (Third layer) PI 75 wt% + APP 25 wt% | 10 | | | | | |
| Example 2-7 | (First layer) PI 50 wt% + APP 50 wt% | 10 | OK | OK | OK | 1,623 | 16 |
| | (Second layer) PI 100 wt% | 10 | | | | | |
| | (Third layer) PI 50 wt% + APP 50 wt% | 10 | | | | | |
| Example 2-8 | (First layer) PI 25 wt% + APP 75 wt% | 10 | OK | OK | NG | 885 | 10 |
| | (Second layer) PI 100 wt% | 10 | | | | | |
| | (Third layer) PI 25 wt% + APP 75 wt% | 10 | | | | | |
| Example 2-9 | (First layer) PI 100 wt% | 10 | OK | OK | OK | 2,206 | 20 |
| | (Second layer) PI 75 wt% + APP 25 wt% | 10 | | | | | |
| | (Third layer) PI 100 wt% | 10 | | | | | |
| Example 2-10 | (First layer) PI 100 wt% | 10 | OK | OK | OK | 1,755 | 18 |
| | (Second layer) PI 50 wt% + APP 50 wt% | 10 | | | | | |
| | (Third layer) PI 100 wt% | 10 | | | | | |
| Example 2-11 | (First layer) PI 100 wt% | 10 | OK | OK | OK | 911 | 14 |
| | (Second layer) PI 25 wt% + APP 75 wt% | 10 | | | | | |
| | (Third layer) PI 100 wt% | 10 | | | | | |

**Table 4:**

| | | Total thickness of separator (µm) | Thermal exposure evaluation | | | Tensile strength | Elongation |
|---|---|---|---|---|---|---|---|
| | | | 137 °C | 140 °C | 143 °C | kgf/cm² | % |
| Example 3-1 | (core) PI 75 wt% | 10 | OK | OK | OK | 921 | 10 |
| | (shell) APP 25 wt% | | | | | | |
| Example 3-2 | Example 3-1 was stacked in 3-layers | 10 | OK | OK | OK | 1,233 | 14 |
| Example 3-3 | (core) PI 50 wt% | 10 | OK | OK | OK | 778 | 10 |
| | (shell) APP 50 wt% | | | | | | |
| Example 3-4 | Example 3-3 was stacked in 3-layers | 10 | OK | OK | OK | 1,053 | 12 |

Referring to Table 1, Examples 1-1 and 1-2 exhibited no thermal runaway even when the temperature was increased to 143 °C, but Comparative Example 1-1 including no APP showed that the thermal runaway occurred at 140 °C, and Comparative Example 1-2 including no PI showed that the thermal runaway occurred from 137 °C.

In addition, Comparative Example 1-3 including less than a desired amount of APP showed that the thermal runaway occurred at 143 °C, and Comparative Examples 1-4 and 1-5 including more than the desired amount of APP showed that the thermal runaway occurred at 143 °C and 140 °C.

Furthermore, referring to Table 1, Comparative Example 1-2 including no PI showed that the separator exhibited deteriorated tensile strength and elongation, compared to the tensile strength and elongation of the Examples. In addition, Comparative Examples 1-4 and 1-5 including excessively more than the desired amount of APP showed that the separator exhibited deteriorated tensile strength and elongation, compared to the tensile strength and elongation of the Examples.

Referring to Table 2, when APP was included at 25 wt% (Example 2-1) and 50 wt% (Example 2-2) based on 100 wt% of the single layer separator, the most desired or improved thermal exposure characteristics, and also desired or improved tensile strength and elongation were accomplished.

Referring to Table 3, Examples 2-6, 2-7, 2-9, and 2-10 including the desired amount of APP exhibited the most desired or improved thermal exposure characteristics, and also desired or improved tensile strength and elongation.

On the other hand, Example 2-8 exhibited somewhat deteriorated thermal exposure characteristics, and Examples 2-8 and 2-11 including more than the desired amount of APP showed that the separators exhibited somewhat deteriorated tensile strength.

Referring to Table 4, Examples 3-1 to 3-4 including the desired amount of APP exhibited the most desired or improved thermal exposure characteristics, and also desired or improved tensile strength and elongation.

While this disclosure has been described in connection with what is presently considered to be practical example embodiments, it is to be understood that the disclosure is not limited to the disclosed embodiments, but, on the contrary, is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | | |
| 30, 30A, 30B, 30C, 30C': | separator | | |
| a: | core | b: | shell |
| 31, 31': | first nanofiber layer | 32, 32': | second nanofiber layer |
| 33, 33': | third nanofiber layer | 1: | first supply device |
| 2: | second supply device | 3: | third supply device |
| 40: | electrode assembly | 50: | case |
| 60: | sealing member | 70: | electrode tab |
| 71: | positive electrode tab | 72: | negative electrode tab |

## Claims

1. A separator for a rechargeable lithium battery, the separator comprising:
nanofibers, wherein the nanofibers include a polyimide resin and a polyphosphate-based compound; and
the polyphosphate-based compound is included in an amount greater than 20 wt% and less than 75 wt% based on 100 wt% of the separator.

2. The separator as claimed in claim 1, wherein the polyphosphate-based compound is included in an amount in a range of 25 wt% to 50 wt% based on 100 wt% of the separator.

3. The separator as claimed in claim 1 or claim 2, wherein a thickness of the separator is in a range of 1 µm to 30 µm.

4. A separator for a rechargeable lithium battery, the separator comprising:
a plurality of nanofiber layers including nanofibers, wherein the nanofiber layers include a polyimide resin; and
at least one layer of the plurality of nanofiber layers further includes a polyphosphate-based compound.

5. The separator as claimed in claim 4, wherein the polyphosphate-based compound is included in an amount greater than 20 wt% and less than 75 wt% based on 100 wt% of the nanofiber layers further including the polyphosphate-based compound.

6. The separator as claimed in claim 4 or claim 5, wherein the polyphosphate compound is included in an amount greater than or equal to 8 wt% and less than 75 wt% based on 100 wt% of the separator.

7. The separator as claimed in any one of claims 4 to 6, wherein a thickness of the nanofiber layer is in a range of 1 µm to 30 µm.

8. A separator for a rechargeable lithium battery, the separator comprising:
nanofibers having a core-shell structure including a core and a shell on the surface of the core; wherein:
the core and the shell each independently comprises at least one of a polyimide resin, a polyphosphate-based compound, and a mixture of the polyimide resin and the polyphosphate-based compound; and
the core and the shell include different compounds.

9. The separator as claimed in claim 8, wherein the polyphosphate-based compound is included in an amount greater than 20 wt% and less than 75 wt% based on 100 wt% of the separator.

10. The separator as claimed in any one of claims 1 to 9, wherein:
the polyphosphate-based compound comprises at least one of a monovalent organic cation, a monovalent metal cation, and a combination thereof;
the monovalent organic cation comprises at least one of an ammonium cation, a melamine cation, a guanidinium cation, and a combination thereof; and
the monovalent metal cation comprises at least one of Li⁺, Na⁺, K⁺, and a combination thereof.

11. The separator as claimed in any one of claims 1 to 10, wherein the polyphosphate-based compound comprises at least one of ammonium polyphosphate, melamine polyphosphate, and a combination thereof.

12. The separator as claimed in any one of claims 1 to 11, wherein an average diameter of the nanofiber is in a range of 10 nm to 300 nm.

13. The separator as claimed in any one of claims 4 to 6 and claims 8 to 12, wherein a thickness of the separator is in a range of 1 µm to 50 µm.

14. The separator as claimed in any one of claims 8 to 12, wherein the separator comprises two or more stacked nanofiber layers including nanofibers having the core-shell structure.

15. A rechargeable lithium battery, comprising:
a positive electrode;
a negative electrode; and
the separator as claimed in any one of claims 1 to 14 between the positive electrode and the negative electrode.
